# EUROPEAN PATENT SPECIFICATION

(11) **EP 4 406 177 B1**
(45) Date of publication and mention of the grant of the patent: **01.01.2025**
(21) Application number: 21783189.0
(22) Date of filing: 23.09.2021
(51) Int. Cl.: H04L 5/14, H04L 5/00

(54) **PARTIALLY OVERLAPPING FULL-DUPLEX TRANSMISSIONS**
TEILWEISE ÜBERLAPPENDE VOLLDUPLEXÜBERTRAGUNGEN
TRANSMISSIONS EN DUPLEX INTÉGRAL PARTIELLEMENT CHEVAUCHANTES

(43) Date of publication of application: 31.07.2024
(73) Proprietor: Telefonaktiebolaget LM Ericsson (publ), 164 83 Stockholm (SE)
(72) Inventor: AMBEDE, Abhishek, 141 58 Huddinge (SE); WILHELMSSON, Leif, 222 20 Lund (SE); DI TARANTO, Rocco, 223 59 Lund (SE); LOPEZ, Miguel, 52074 Aachen (DE)
(74) Representative: Ericsson
(86) International application number: PCT/EP2021/076167
(87) International publication number: WO 2023/046287

(56) References cited:
- EP-A1- 3 761 585
- US-A1- 2018 091 284
- US-A1- 2020 396 742
- US-A1- 2021 028 897

## Description

### Technical Field

The present invention relates to methods for controlling wireless transmissions and to corresponding devices, systems, and computer programs.

### Background

In wireless communication technologies, there is an increased interest in using unlicensed bands, like the 2.4 GHz ISM band, the 5 GHz band, the 6 GHz band, and the 60GHz band using more advanced channel access technologies. Historically, Wi-Fi has been the dominant standard in unlicensed bands when it comes to applications requiring support for high data rates. Due to the large available bandwidth in the unlicensed band, the WLAN (Wireless Local Area Network) technology based on the IEEE 802.11 standards family provides a very simple distributed channel access mechanism based on a so-called distributed coordination function (DCF).

Distributed channel access means that a device, in IEEE 802.11 terminology known as a station (STA), tries to access the wireless channel when it has data to send. Effectively there is no difference in channel access whether the station is an access point (AP) or a non-access point (non-AP). DCF works well as long as the load is not too high. When the load is high, and in particular when the number of stations trying to access the wireless channel is large, channel access based on DCF does not work well. The reason for this is that there will be a high probability of collision on the channel, leading to poor channel usage.

A default channel access mechanism used in current WLAN systems is referred to as enhanced distributed channel access (EDCA), as specified in IEEE Standard for Information technology-Telecommunications and information exchange between systems Local and metropolitan area networks-Specific requirements - Part 11: Wireless LAN Medium Access Control (MAC) and Physical Layer (PHY) Specifications," in IEEE Std 802.11-2016 (Revision of IEEE Std 802.11-2012) , vol., no., pp.1-3534, 14 Dec. 2016, in the following denoted as "IEEE 802.11 Standard". In the EDCA channel access mechanism, the STA accesses the channel using a set of channel access parameters based on a traffic class of the data. The wireless channel is obtained for a time duration denoted as TXOP (transmit opportunity), in which multiple frames of the same data class may be transmitted. The maximum size of a TXOP depends on the data type. A typical duration of a TXOP is in the range of a few milliseconds.

To improve channel usage, and in particular to allow for better support of a large number of devices, a more centralized channel access may be utilized. Such centralized channel access may involve that rather than letting a STA access the channel whenever it has data to send, the channel access is controlled by the AP. A corresponding channel access scheme is for example supported in the IEEE 802.11ax technology, see IEEE 802.11ax-2021 - IEEE Standard for Information technology- Telecommunications and information exchange between systems Local and metropolitan area networks-Specific requirements Part 11: Wireless LAN Medium Access Control (MAC) and Physical Layer (PHY) Specifications Amendment 1: Enhancements for High Efficiency WLAN (November 2019), in the following denoted as "IEEE 802.11ax amendment" or High Efficiency (HE) amendment. The IEEE 802.11ax technology, or HE technology, for example supports orthogonal frequency division multiple access (OFDMA) in both downlink (DL), i.e., in a direction from the AP to the STA, and uplink (UL), i.e., in a direction from the STA to the AP. Also multi-user (MU) transmission in form of multi-user multiple input multiple output (MU-MIMO) is supported for both the DL and the UL. By supporting MU transmission and letting the AP control the channel access within a cell, efficient channel usage is achieved and one can avoid collisions arising due to contention in the cell, in the IEEE 802.11 terminology also referred to as basic service set (BSS).

One feature introduced by the IEEE 802.11ax technology is the concept of resource units (RUs). The RUs are defined by orthogonal frequency division multiplexing (OFDM) on multiple subcarriers of the wireless channel and may be used for allocating frequency resources of the wireless channel to a PPDU (Physical Layer Protocol Data Unit) transmission. In the IEEE 802.11ax technology, the subcarriers are also denoted as "tones". Depending upon the number of tones, the different sizes of RUs defined and supported in the HE technology are: 26-tone RU, 52-tone RU, 106-tone RU, 242-tone RU, 484-tone RU, 996-tone RU and 2x996-tone RU. Using the RU feature, the available bandwidth of the wireless channel can be divided into multiple RUs. As an example, a bandwidth of 20 MHz can be divided into nine 26-tone RUs, four 52-tone RUs, or two 106-tone RUs, or can support one 242-tone RU. The main use case for this RU feature in HE is OFDMA based MU transmission. In such OFDMA based MU transmission, every user is allocated a single RU, possibly also with different RU sizes for different users. The HE technology supports DL OFDMA and UL OFDMA transmissions. Two flavors of UL OFDMA transmissions are supported in the HE technology: a first mode of UL OFDMA in which specific users are explicitly allocated specific RUs for transmissions, and a second mode denoted as UL OFDMA based Random Access (UORA), in which some RUs are reserved for random access. While the HE technology supports the allocation of only one RU per STA, the IEEE 802.11be technology is expected to also support the allocation of more than one RU to a single STA, see IEEE P802.11be/D0.3 Draft Standard for Information technology- Telecommunications and information exchange between systems Local and metropolitan area networks-Specific requirements Part 11: Wireless LAN Medium Access Control (MAC) and Physical Layer (PHY) Specifications Amendment: Enhancements for Extremely High Throughput (January 2021), in the following denoted as "IEEE 802.1The Draft" or Extremely High Throughput (EHT) draft. The EHT technology also supports new RU sizes that are derived from the combinations of the different RU sizes defined in the HE technology.

In a UL OFDMA PPDU having a transmission bandwidth of 20 MHz, the bandwidth of a preamble portion of the UL OFDMA PPDU is always 20 MHz, irrespective of size and location of the allocated RU. As compared to that, in a UL OFDMA PPDU having a transmission bandwidth of 40 MHz or more, the bandwidth of the preamble portion of the UL OFDMA PPDU varies depending upon the size and location of the allocated RU. For example, in the HE technology, a 80 MHz UL OFDMA PPDU that has a 242-tone RU allocation for a data field of the UL OFDMA PPDU, the bandwidth of the preamble portion can be either 20 MHz or 40 MHz, and it depends upon which specific 242-tone RU is allocated to the data field. Accordingly, in the HE technology the bandwidth of the preamble portion of a UL OFDMA PPDU, or more generally any trigger-based PPDU, depends on size and location of the tones of the allocated RU. This dependency can for example be seen from Figure 27-12 of the HE amendment.

In addition to high bandwidth communications in unlicensed bands, there is increasing interest in wireless communications with low and/or bounded latency, in the following denoted as low/bounded latency communications. Such low/bounded latency wireless communications may support, for example, applications in Industrial Internet of Things (IIoT) and gaming. In such applications, a typical requirement is that a data packet is transmitted "at the right time". The transmitter of the data packet should thus be able to precisely control when the data packet is actually transmitted. To achieve this, the transmitter may need to access the wireless channel with a low channel access delay that has a variation around the mean, also denoted as channel access jitter, which is bounded. Another requirement is high reliability to ensure that data packets are correctly received with high probability, thus avoiding delays due to retransmission or packet loss. Yet another requirement is that the receiver processes the received data as soon as possible to deliver the data to higher layers. The IEEE 802.11 Standard and its amendments have so far not been developed with an emphasis on achieving communications with low/bounded latency and high reliability. This may for example be attributed to the usage of unlicensed frequency bands and the resulting channel access rules, as well as existing regulations for unlicensed frequency bands, which typically makes it difficult to provide deterministic channel access opportunities for the transmitting STAs. More deterministic channel access opportunities of the STAs may be achieved when the STAs operate in a scheduled OFDMA mode as for example supported by the IEEE 802.11 ax technology. Such scheduled mode however typically does not guarantee achieving low/bounded latency.

Even more importantly, if applications and use cases supported in wired networks based on time sensitive networking (TSN) standards are to be supported over a wireless medium, and possibly in an unlicensed band, it may be critical that the utilized wireless technology fulfills strict performance requirements with respect to latency and reliability, as for example described in "IEEE 802.1 TSN - An Introduction", TGbe 19-1298, by Janos Farkos (URL: https://mentor.ieee.org/802.11/dcn/19/11-19-1298-01-00be-ieee-802-1-tsn-an-introduction.pdf, July 2019). This demonstrates the need to enhance WLAN technologies to support applications with requirements in terms of latency and reliability which may be as strict as those supported in wired networks.

US 2018/0091284 A1 describes full-duplex communication between AP and STA, in which the AP can use overlapping portions of the channel resources to receive uplink data and transmit uplink data. US 2020/0396742 A1 and US 2021/0028897 A1 describe simultaneous transmission and reception of a PPDU (Physical Layer Protocol Data Unit) based on Full-Duplex-Radio (FDR). EP 3761 585 A1 describes sending and receiving data frames in full-duplex communication, with start location, end location, and OFDM symbols of the dataframes being aligned.

Accordingly, there is a need for techniques which allow for improved support of low-latency data traffic in a wireless communication system.

### Summary

According to an embodiment, a method of controlling wireless transmissions in a wireless communication system is provided. According to the method, a wireless communication device configures a wireless channel defining multiple resource units (RUs) by orthogonal frequency division multiplexing (OFDM) on a plurality of subcarriers. The wireless communication device sends a first wireless transmission on a first subset of the multiple RUs. While sending the first wireless transmission, the wireless communication device receives a second wireless transmission on a second subset of the multiple RUs. The first subset of the multiple RUs and the second subset of the multiple RUs are at least in part non-overlapping. OFDM symbols of the second wireless transmission are time-aligned with OFDM symbols of the first wireless transmission. Further, the first wireless transmission and the second wireless transmission each comprise a preamble part and a data part, and the preamble part of the first wireless transmission is punctured based on the second subset of the multiple resource units.

According to a further embodiment, a wireless communication device for a wireless communication system is provided. The wireless communication device is configured to configure a wireless channel by defining multiple RUs by OFDM on a plurality of subcarriers. Further, the wireless communication device is configured to send a first wireless transmission on a first subset of the multiple RUs. Further, the wireless communication device is configured to, while sending the first wireless transmission, receive a second wireless transmission on a second subset of the multiple RUs. The first subset of the multiple RUs and the second subset of the multiple RUs are at least in part non-overlapping. OFDM symbols of the second wireless transmission are time-aligned with OFDM symbols of the first wireless transmission. Further, the first wireless transmission and the second wireless transmission each comprise a preamble part and a data part, and the preamble part of the first wireless transmission is punctured based on the second subset of the multiple resource units.

According to a further embodiment, a wireless communication device for a wireless communication system is provided. The wireless communication device comprises at least one processor and a memory. The memory contains instructions executable by said at least one processor, whereby the wireless communication device is operative to configure a wireless channel defining multiple RUs by OFDM on a plurality of subcarriers. Further, the memory contains instructions executable by said at least one processor, whereby the wireless communication device is operative to send a first wireless transmission on a first subset of the multiple RUs. Further, the memory contains instructions executable by said at least one processor, whereby the wireless communication device is operative to, while sending the first wireless transmission, receive a second wireless transmission on a second subset of the multiple RUs. The first subset of the multiple RUs and the second subset of the multiple RUs are at least in part non-overlapping. OFDM symbols of the second wireless transmission are time-aligned with OFDM symbols of the first wireless transmission. Further, the first wireless transmission and the second wireless transmission each comprise a preamble part and a data part, and the preamble part of the first wireless transmission is punctured based on the second subset of the multiple resource units.

According to a further embodiment, a computer program or computer program product is provided, e.g., in the form of a non-transitory storage medium, which comprises program code to be executed by at least one processor of a wireless communication device is provided. Execution of the program code causes the wireless communication device to configure a wireless channel by defining multiple RUs by OFDM on a plurality of subcarriers. Further, execution of the program code causes the wireless communication device to send a first wireless transmission on a first subset of the multiple RUs. Further, execution of the program code causes the wireless communication device to, while sending the first wireless transmission, receive a second wireless transmission on a second subset of the multiple RUs. The first subset of the multiple RUs and the second subset of the multiple RUs are at least in part non-overlapping. OFDM symbols of the second wireless transmission are time-aligned with OFDM symbols of the first wireless transmission. Further, the first wireless transmission and the second wireless transmission each comprise a preamble part and a data part, and the preamble part of the first wireless transmission is punctured based on the second subset of the multiple resource units.

Details of such embodiments and further embodiments will be apparent from the following detailed description.

### Brief Description of the Drawings

Fig. 1 schematically illustrates a wireless communication system according to an embodiment.
Fig. 2A schematically illustrates an example of resource usage.
Fig. 2B schematically illustrates a further example of resource usage.
Fig. 2C schematically illustrates a further example of resource usage.
Fig. 2D schematically illustrates a further example of resource usage.
Fig. 3A schematically illustrates a further example of resource usage according to an embodiment which is according to the invention.
Fig. 3B schematically illustrates a further example of resource usage according to an embodiment.
Fig. 4A schematically illustrates an exemplary scenario involving partially overlapping full-duplex transmissions according to an embodiment.
Fig. 4B schematically illustrates a further exemplary scenario involving partially overlapping full-duplex transmissions according to an embodiment.
Fig. 5A schematically illustrates a further exemplary scenario involving partially overlapping full-duplex transmissions according to an embodiment.
Fig. 5B schematically illustrates a further exemplary scenario involving partially overlapping full-duplex transmissions according to an embodiment.
Fig. 6 schematically illustrates an example of signalling used according to an embodiment.
Fig. 7 shows a flowchart for schematically illustrating a method according to an embodiment.
Fig. 8 shows a block diagram for schematically illustrating functionalities of a wireless communication device according to an embodiment.
Fig. 9 schematically illustrates structures of a wireless communication device according to an embodiment.

### Detailed Description

In the following, concepts in accordance with exemplary embodiments of the invention will be explained in more detail and with reference to the accompanying drawings. The illustrated embodiments relate to controlling of wireless transmissions in a wireless communication system. The wireless communication system may be a WLAN (Wireless Local Area Network) system based on a IEEE 802.11 technology. However, it is noted that the illustrated concepts could also be applied to other wireless communication technologies, e.g., to contention-based modes of the LTE (Long Term Evolution) or NR (New Radio) technology specified by 3GPP (3^{rd} Generation Partnership Project). The illustrated concepts may be implemented by various types of wireless devices, in particular by APs and/or by non-AP STAs.

According to the illustrated concepts, wireless transmissions are performed on a wireless channel defining multiple RUs by OFDM on a plurality of subcarriers, such as for example specified in the IEEE 802.11ax technology. An AP or non-AP STA uses the multiple RUs to send one or more outgoing wireless transmission(s) while at the same time receiving one or more incoming wireless transmissions. The multiple RUs are thus used in a full duplex (FD) communication mode. As compared to conventional FD communication modes, the outgoing wireless transmission(s) and the incoming wireless transmission(s) use different subsets of the multiple RUs, which are at least in part non-overlapping. In this way, interference between the outgoing wireless transmission(s) and the incoming wireless transmission(s) can be managed in an efficient manner by controlling the degree of allowed overlap. As compared to frequency-division duplex (FDD) communication modes, it is however not necessary to utilize a duplex filter for separating an outgoing frequency channel and an incoming frequency channel. Rather, the subset of the RUs used for the outgoing wireless transmission(s) may be adjacent to or even overlapping with the subset of the RUs used for the incoming wireless transmission(s).

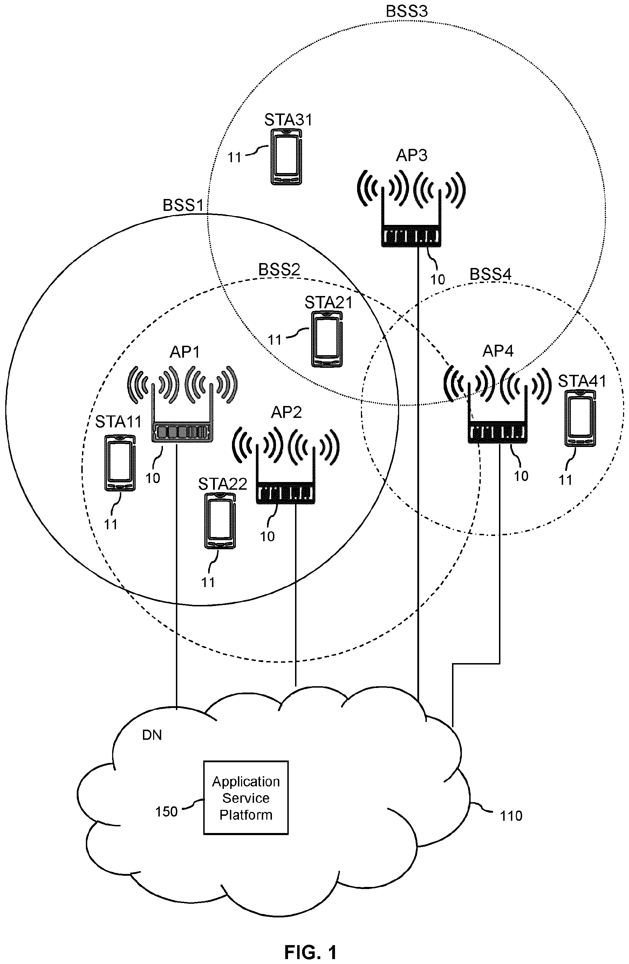

Fig. 1 illustrates an exemplary wireless communication system according to an embodiment. In the illustrated example, the wireless communication system includes multiple APs 10, in the illustrated example referred to as AP1, AP2, AP3, AP4, and multiple stations 11, in the illustrated example referred to as STA11, STA12, STA21, STA31, and STA41. STA11 is served by AP1 (in a first BSS denoted as BSS1), STA21 and STA22 are served by AP2 (in a second BSS denoted as BSS2), STA31 is served by AP3 (in a third BSS denoted as BSS3), and STA41 is served by AP4 (in a fourth BSS denoted as BSS4). The stations 11 may be non-AP STAs and correspond to various kinds of wireless devices, for example user terminals, such as mobile or stationary computing devices like smartphones, laptop computers, desktop computers, tablet computers, gaming devices, or the like. Further, the stations 11 could for example correspond to other kinds of equipment like smart home devices, printers, multimedia devices, data storage devices, or the like.

In the example of Fig. 1, each of the stations 11 may connect through a radio link to one of the APs 10. For example depending on location or channel conditions experienced by a given station 11, the station 11 may select an appropriate AP 10 and BSS for establishing the radio link. The radio link may be based on one or more OFDM carriers from a frequency spectrum which is shared on the basis of a contention based mechanism, e.g., an unlicensed band like the 2.4 GHz ISM band, the 5 GHz band, the 6 GHz band, or the 60 GHz band.

Each AP 10 may provide data connectivity of the stations 11 connected to the AP 10. As further illustrated, the APs 10 may be connected to a data network (DN) 110. In this way, the APs 10 may also provide data connectivity of stations 11 connected to different APs 10. Further, the APs 10 may also provide data connectivity of the stations 11 to other entities, e.g., to one or more servers, service providers, data sources, data sinks, user terminals, or the like. Accordingly, the radio link established between a given station 11 and its serving AP 10 may be used for providing various kinds of services to the station 11, e.g., a voice service, a multimedia service, or other data service. Such services may be based on applications which are executed on the station 11 and/or on a device linked to the station 11. By way of example, Fig. 1 illustrates an application service platform 150 provided in the DN 110. The application(s) executed on the station 11 and/or on one or more other devices linked to the station 11 may use the radio link for data communication with one or more other stations 11 and/or the application service platform 150, thereby enabling utilization of the corresponding service(s) at the station 11.

To enable low-latency and/or bounded latency of APs 10 and non-AP stations 11 in a scenario like illustrated in Fig. 1, the illustrated concepts may be used to implement partially overlapping FD transmissions between the APs and STAs. These transmissions may be based on a partial FD communication mode. In this proposed partial FD communication mode, a single wireless channel is used by a STA, e.g., an AP or a non-AP STA, for simultaneously transmitting outgoing PPDUs and receiving incoming PPDUs, wherein the data fields of the PPDUs occupy RUs which are non-overlapping. The non-overlapping RU allocations for the data fields of the transmitted and received PPDUs is reflected by the term "partial FD". During such partially overlapping FD transmissions, OFDM symbol boundaries of the outgoing PPDU and the incoming PPDU may be time-aligned. In this way, it becomes possible to achieve orthogonality of the subcarrier signals between the outgoing PPDU and the incoming PPDU. To reduce the mutual interference between the outgoing PPDU and the incoming PPDU, time dimension overlap of the preamble fields of the outgoing PPDU and the incoming PPDU may be avoided. In some cases, puncturing of the preamble fields may be used to reduce the interference caused by the preamble fields. Further, additional transmit (TX) processing of the PPDUs may be performed to reduce the interference that they may cause to any other PPDU conveyed by the partially overlapping FD transmissions. The STAs may send and/or receive signaling to indicate their respective partial FD capability. Additional signaling may be used to setup and activate the partial FD mode before actually performing the partially overlapping FD transmissions.

Accordingly, the partial FD communication mode may involve that the RUs used for the preamble field of the incoming PPDU overlap the RUs used for the outgoing PPDU or that the RUs used for the preamble field of the outgoing PPDU overlap the RUs used for the incoming PPDU, while the RUs used for the data field of the incoming PPDU and the RUs used for the data field of the transmitted PPDU are non-overlapping. Such configuration, which avoids overlap between the data fields but allows overlap due to the preamble fields, may allow for significantly relaxing requirements on self-interference (SI) cancellation or suppression. Accordingly, it is facilitated to simultaneously send the outgoing PPDU while receiving the incoming PPDU. Accordingly, the data fields of the PPDUs can be isolated from each other, thereby avoiding direct interference from one data field to the other. If direct interference to the data field of a PPDU is caused by only the preamble field of the other PPDU, the impact of this interference can be similar to burst interference and can be negligible when choosing a sufficiently robust MCS (modulation and coding scheme) for the affected data field and/or by using a sufficiently high transmit power for the PPDU. Such selection of the MCS and/or transmit power may also be controlled based on a feedback loop between the STAs sending and receiving the PPDUs. In some scenarios, puncturing the preambles fields can help to reduce the overlap due to the preamble fields as well, which may help to even further relax the requirements on SI cancellation or suppression. In an AP, the partial FD communication mode can help to increase the channel access possibilities of the AP as well as of the non-AP STAs associated with the AP, thereby improving latency and/or throughput. Moreover, if implemented in both APs and non-AP STAs, the partial FD communication mode can further increase the overall system performance in terms of throughput and/or latency. The partial FD communication mode may for example be used to support stringent low latency use cases, such as TSN use cases. Along with improving support for low latency use cases, the partial FD communication mode can also help to improve system performance in various use cases.

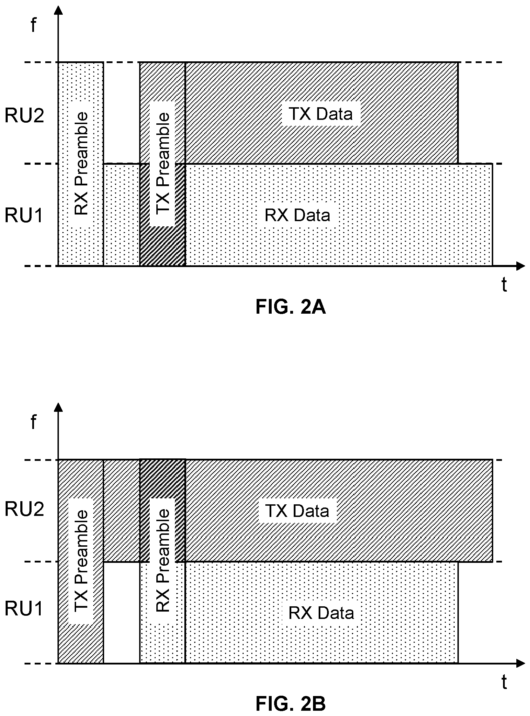

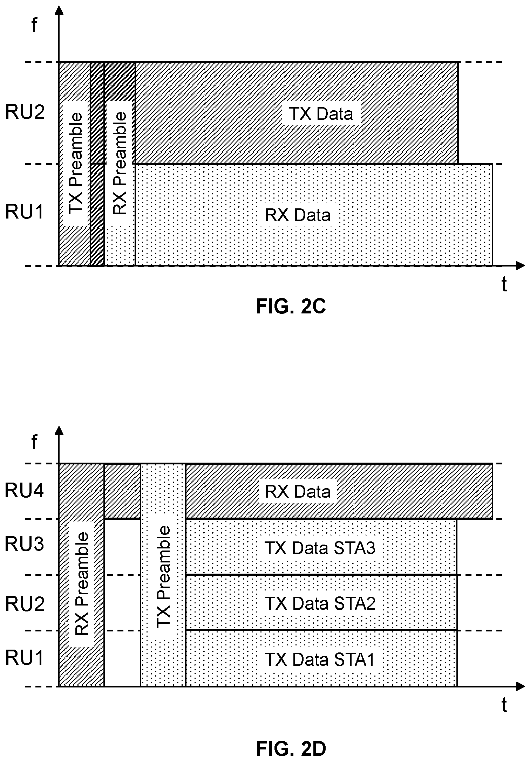

Figs. 2A, 2B, and 2C illustrate examples of resource usage in the partial FD communication mode. These examples assume a single outgoing PPDU and a single incoming PPDU at a STA operating in the partial FD communication mode, herein also denoted as partial FD STA. This partial FD STA may for example correspond to one of the above-mentioned APs 10 or one of the above-mentioned stations 11. A preamble field of the outgoing PPDU is denoted by "TX Preamble", and a data field of the outgoing PPDU is denoted by "TX Data". A preamble field of the incoming PPDU is denoted by "RX Preamble", and a data field of the incoming PPDU is denoted by "RX Data". Further, the examples of Figs. 2A, 2B, and 2C assume that the wireless channel defines two RUs. denoted as RU1 and RU2.

In the example of Fig. 2A, the data field of the outgoing PPDU is allocated to RU2, whereas the data field of the incoming PPDU is allocated to RU1. Thus, the data fields of the outgoing PPDU and the incoming PPDU do not overlap in frequency. As further illustrated, reception of the incoming PPDU starts before transmission of the outgoing PPDU. From the point of view of achieving successful reception of the incoming PPDU at the partial FD STA, the situation illustrated in Fig. 2A can be beneficial because direct interference on the incoming PPDU is limited to a very short duration of its data field, namely to the duration of the preamble field of the outgoing PPDU. When considering the typical small durations of the preamble fields in the IEEE 802.11 technologies, the interference on the incoming PPDU may be negligible when selecting a sufficiently robust MCS for the data field of the incoming PPDU. Usage of more sophisticated SI cancellation mechanisms may thus be avoided.

Also in the example of Fig. 2B, the data field of the outgoing PPDU is allocated to RU2, whereas the data field of the incoming PPDU is allocated to RU1. Thus, the data fields of the outgoing PPDU and the incoming PPDU do not overlap in frequency. As further illustrated, transmission of the outgoing PPDU starts before reception of the incoming PPDU. From the point of view of achieving successful reception of the incoming PPDU at the partial FD STA, the situation illustrated in Fig. 2A can be beneficial because direct interference on the incoming PPDU is limited to its preamble field, and only to that part of the preamble field which is transmitted on RU2, i.e., the part of the bandwidth which overlaps in frequency with the data field of the outgoing PPDU. Since the preamble fields are typically modulated with a very robust MCS, in many cases the most robust MCS, and are thus quite tolerant to interference, the impact of the interference on the incoming PPDU may be negligible. Further, as compared to the example of Fig. 2A, the data field of the incoming PPDU does not face any direct interference. Accordingly, in a situation like illustrated in Fig. 2B, usage of more sophisticated SI cancellation mechanisms may thus be avoided.

Also in the example of Fig. 2C, the data field of the outgoing PPDU is allocated to RU2, whereas the data field of the incoming PPDU is allocated to RU1. Thus, the data fields of the outgoing PPDU and the incoming PPDU do not overlap in frequency. As further illustrated, start of transmission of the outgoing PPDU and start of reception of the incoming PPDU coincide or occur within a very short time span, resulting in complete or at least partial time overlap of the preamble fields of the outgoing PPDU and the incoming PPDU. In such situations, achieving successful reception of the incoming PPDU may be more challenging than in the example of Fig. 2A or 2B, because the preamble field of the incoming PPDU faces interference over its full bandwidth, mainly from the preamble field of the outgoing PPDU. This increased level of interference may be addressed by applying more stringent SI cancellation requirements for the preamble portion of the incoming PPDU, e.g., based on a SI cancellation mechanism.

The partial FD communication mode may also be used to efficiently support simultaneous DL OFDMA and UL communication. Fig. 2D illustrates a corresponding example of resource usage. The example of Fig. 2D assumes an AP operating in the partial FD communication mode, e.g., one of the above-mentioned APs 10, sends an outgoing DL MU PPDU based on DL OFDMA, to different STAs. In this case, each STA receives a portion of the DL MU PPDU on a dedicated RU. While the AP sends the outgoing DL MU PPDU, it simultaneously receives an incoming PPDU, i.e., UL PPDU. A preamble field of the outgoing PPDU is denoted by "TX Preamble", and respective portions of the data field for different STAs in the outgoing PPDU are denoted by "TX Data STA1", "TX Data STA2", and "TX Data STA3", respectively. A preamble field of the incoming PPDU is denoted by "RX Preamble", and a data field of the incoming PPDU is denoted by "RX Data". In the example of Fig. 2D it is assumed that the wireless channel defines four RUs denoted as RU1, RU2, RU3, and RU4. The respective portions of the data field for different STAs in the outgoing DL MU PPDU are allocated to different RUs, namely to RU1, RU2, and RU3. The data field of the incoming PPDU is allocated to still another RU, namely to RU4. The RUs may for example correspond to 52-tone RUs defined on a wireless channel bandwidth of 20 MHz. Also in the example of Fig. 2D, the respective portions of the data field for different STAs in the outgoing PPDU and the incoming PPDU do not overlap in frequency.

It is noted that the number of destination STAs corresponding to the outgoing PPDU in the example of Fig. 2D is merely exemplary and that in other scenarios, the DL OFDMA communication used for the outgoing PPDU could be based on using the 20 MHz bandwidth of the wireless channel to allocate seven 26-tone RUs to seven different destination STAs. One non-overlapping 52-tone RU could then be allocated to an incoming PPDU simultaneously received using the partial FD communication mode.

In a scenario like illustrated in Fig. 2D, time overlap of the preamble field of the outgoing MU PPDU and the preamble field of the incoming PPDU can be avoided in various ways. For example, the AP can trigger the transmission of the incoming PPDU in such a way that it begins after the end of the preamble field of the outgoing PPDU, e.g., using a UL trigger frame, or otherwise mandate that the transmission of the incoming PPDU begins after the end of the preamble field of the outgoing PPDU. Alternatively, the AP can first trigger the transmission of the incoming PPDU, e.g., using a UL trigger frame, and then start transmission of the outgoing PPDU after the end of the preamble field of the incoming PPDU.

Further, in some scenarios also different RUs could be allocated to the data fields of multiple incoming UL PPDUs, which may be transmitted in parallel based on UL OFDMA. Still further, an incoming UL PPDU could be scheduled by the AP, e.g., by sending an UL trigger frame, or could be unscheduled, e.g., an UORA PPDU. For example, while using DL OFDMA the AP could utilize some of the RUs for transmission of an outgoing DL MU PPDU to multiple non-AP STAs and at the same time deliberately leave some RUs unallocated for reception of one or more incoming UORA PPDUs. Accordingly, the partial FD communication mode can be used to support scheduled UL wireless transmissions from STAs associated to the AP as well as unscheduled UL transmissions from unspecific STAs.

Accordingly, the partial FD communication mode can be combined with various scheduling schemes involving mixed and simultaneous DL and UL wireless transmissions. This can for example also enable the AP to perform long duration DL OFDMA transmissions without bothering about having to periodically schedule dedicated time slots for UL transmissions. Moreover, the distribution of RUs for the DL and UL PPDUs can be kept flexible depending upon the DL traffic load and UL traffic load and/or quality of service requirements.

The above-described partial avoidance of overlapping RUs may be supplemented by further measures to reduce the requirements on SI cancellation or suppression at an AP or non-AP STA operating in the partial FD communication mode, thereby further enhancing the chances of successful decoding of the incoming PPDU and/or the outgoing PPDU.

For example, if OFDM symbol boundaries of the incoming PPDU and the outgoing PPDU are not time aligned, there is a risk of indirect interference to the incoming PPDU due to spectral leakage from the outgoing PPDU. Due to the lack of time alignment, the subcarriers corresponding to the data field of the outgoing PPDU would not be orthogonal to the subcarriers corresponding to the data fields of the incoming PPDU which is being received and decoded at the partial FD STA. The amount of spectral leakage increases with increasing amount of timing mismatch between the PPDUs. Accordingly, it may be beneficial to supplement the partial FD communication mode with a mechanism to achieve or improve time alignment of the OFDM symbols of the outgoing PPDU and the incoming PPDU. Such time alignment mechanism may for example be based on that the STA which transmits one of the PPDUs detects the OFDM symbol timing of the other PPDU, which has already started, and then aligns the timing of the transmitted PPDU to the detected timing. By means of the time alignment, interference on the data field of the incoming PPDU can be further reduced, which in turn allows for further relaxing the requirements on SI cancellation or suppression.

As already mentioned above, time overlap of the preamble fields of the incoming PPDU and the outgoing PPDU can make it more challenging to achieve successful reception of the incoming PPDU. Moreover, the information in the preamble field of a PPDU might also be used by other STAs in the same BSS or outside the BSS to set their network allocation vectors (NAVs) or preamble-detection based CCA indicators based on determining the duration of the PPDU from a length indicator in the preamble field, so that the other STAs can refrain from transmitting on the same wireless channel for an appropriate period of time. Accordingly, it may be beneficial to avoid such time overlap of the preamble fields of the incoming PPDU and the outgoing PPDU. This can be achieved by orchestration of the start of the transmissions of the PPDUs by one of the STAs involved in the partial FD communication, e.g., by an AP operating in the partial FD communication mode.

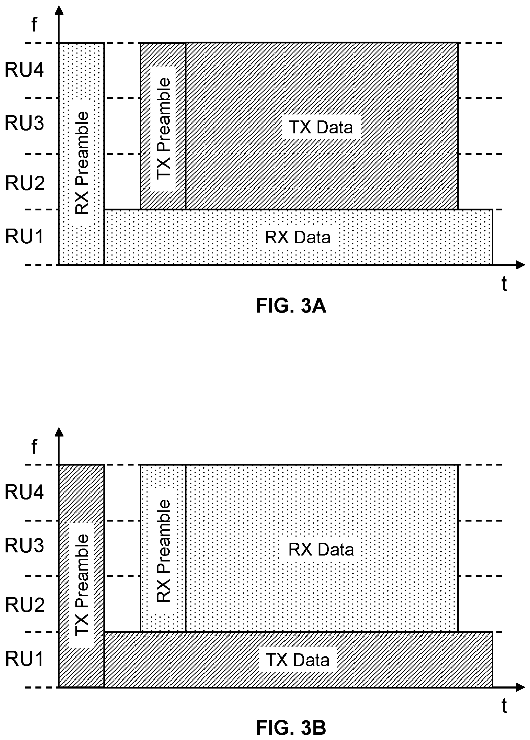

In some scenarios, the partial FD communication mode may also be supplemented by specific puncturing of at least one of the preamble fields of the incoming PPDU or the outgoing PPDU. In this way, interference caused by the preamble field of one PPDU to the other PPDU may be reduced. Here, it is noted that this puncturing is specific to the preamble field and not applied to the data field of the PPDU. In some cases, the puncturing pattern applied to the preamble field may be set in such a way that frequency overlap with the other PPDU is completely avoided. However, also a partial avoidance of frequency overlap of the preamble field with the other PPDU may help to reduce interference and allow for further relaxing the requirements for SI cancellation or suppression. In addition, the puncturing of the preamble field may be beneficial for the intended recipient(s) of the preamble field, because the recipient(s) would receive a narrower clean preamble field, that is known beforehand to be punctured, rather than receiving a wider preamble field affected by interference. Figs. 3A and 3B illustrate examples of resource usage involving such specific puncturing of a preamble field. The examples of Figs. 3A and 3B assume a single outgoing PPDU and a single incoming PPDU at a partial FD STA. This partial FD STA may for example correspond to one of the above-mentioned APs 10 or one of the above-mentioned stations 11. A preamble field of the outgoing PPDU is denoted by "TX Preamble", and a data field of the outgoing PPDU is denoted by "TX Data". A preamble field of the incoming PPDU is denoted by "RX Preamble", and a data field of the incoming PPDU is denoted by "RX Data". Further, the examples of Figs. 3A and 3B assume that the wireless channel defines four RUs, denoted as RU1, RU2, RU3, and RU4, e.g., corresponding to an RU granularity of 20 MHz on 80 MHz bandwidth of the wireless channel.

In the embodiment of Fig_{.} 3A, which is according to the invention, RU1 is allocated to the data field of the incoming PPDU, and RU2, RU3, and RU4 are allocated to the data field of the outgoing PPDU. The preamble field of the outgoing PPDU, which starts after the preamble field of the incoming PPDU, is punctured, so that it covers only RU2, RU3, and RU4, avoiding frequency overlap with RU1. In the example of Fig. 3B, RU1 is allocated to the data field of the outgoing PPDU, and RU2, RU3, and RU4 are allocated to the data field of the incoming PPDU. The preamble field of the incoming PPDU, which starts after the preamble of the outgoing PPDU , is punctured, so that it covers only RU2, RU3, and RU4, avoiding frequency overlap with RU1. It is noted that unless puncturing is applied to the preamble field, or unless the PPDU is a trigger-based PPDU that involves a preamble field which does not span the entire bandwidth of the wireless channel, the preamble field would cover the entire bandwidth of the wireless channel, as for example illustrated for the preamble field of the incoming PPDU in the example of Fig. 3A and for the preamble field of the outgoing PPDU in the example of Fig. 3B.

In some scenarios, also smaller granularity of the puncturing patterns could be supported, e.g., a granularity corresponding to the size of the smallest supported RU in the bandwidth of the wireless channel. This may help to achieve a configuration in which the bandwidths of the preamble fields of the PPDUs are only as wide as or as closely matching as possible to the bandwidths of the data fields of their corresponding PPDUs. In this case, specific puncturing of the preambles could also be utilized to avoid frequency overlap while using 20 MHz bandwidths for each of the PPDUs involved in the partial FD communication, e.g., like in the examples of Figs. 2A and 2B.

Further, the partial FD communication mode may be supplemented by specific TX processing of a PPDU to reduce interference to other PPDUs. For example, the PPDUs transmitted by typical APs and non-AP STAs are often characterized by non-linear power amplifier (PA) distortion components when the TX powers are high, i.e., when the PAs are driven hard to achieve their peak output powers. This may be particularly the case for non-AP STAs, such as low-cost mobile handsets, which may use lower quality PAs. The non-linear PA distortion components are typically produced over the entire transmission bandwidth of a PPDU. Correspondingly, even when the data field of a PPDU occupies just a portion of the bandwidth of the wireless channel, the data field can still cause non-linear PA distortion components over the entire bandwidth of the wireless channel. In the partial FD communication mode, such non-linear PA distortion components can result in cross-RU interference problems, because even if the RU allocations for the data fields of the incoming and outgoing PPDUs are non-overlapping, the data field of one PPDU may cause indirect interference to the data field of the other PPDU. This indirect cross-RU interference problem may become serious if the TX powers of the PPDUs are high, thereby leading to strong PA distortion components across the entire bandwidth. To avoid such indirect interference problems, specific TX processing of the PPDUs may be used, for example to reduce or remove the non-linear PA distortion components that are generated in the portions of the bandwidth that are not occupied by the data field of the PPDU. As a result, the non-overlapping data fields of the other PPDU can be protected from the indirect cross-RU interference. The specific TX processing of the PPDU may include lowering the TX power of the PPDU to reduce the interference problems such as PA distortion components created due to its preamble field and data field. Further, the specific TX processing may include performing dedicated TX filtering of the data field of the PPDU, to reduce the eventual interference problems such as PA distortion components that may be created in the unoccupied RUs of the bandwidth.

The partial FD communication mode can be applied in various application scenarios. Due to the possibility to undertake multiple wireless transmissions at the same time over the same wireless channel, it becomes for example possible to efficiently reduce latency of the wireless transmissions. For example, an AP operating in the partial FD communication mode can support low latency UL transmissions on the operating channel of its BSS while continuing its DL transmissions on the operating channel. Further, an AP operating in the partial FD communication mode may be able to support low latency UL transmissions irrespective of whether the low latency UL traffic is predictable or unpredictable. For example, the AP may appropriately trigger UL transmissions if the low latency UL traffic is deterministic and thus predictable to at least some degree. Further, the AP could leave one or more RUs unallocated during DL transmissions so that they can be accessed by non-AP STAs for UL transmissions of non-deterministic and thus unpredictable low latency UL traffic. In each case the UL transmissions benefit from not having to wait until ongoing DL transmissions by the AP have ended. Similarly, the AP operating in the partial FD communication mode could also perform low latency DL transmissions on its operating channel while continuing to receive UL transmissions on the operating channel. Additionally, while supporting low latency UL transmissions, depending upon its own SI cancellation or suppression capability, the AP operating in the partial FD communication mode could mandate its associated non-AP STAs to perform one or more of the above-mentioned supplemental measures, such as OFDM symbol boundary time alignment, specific puncturing of preamble fields, and/or specific TX processing to reduce interference problems such as PA distortion components.

In another scenario, it may occur that an AP operating in the partial FD communication mode is not able to receive an UL PPDU carrying data while simultaneously transmitting a DL PPDU. The data may for example be high-priority data or data subject to a requirement of low latency. In this case, the AP could use the partial FD communication mode to receive an UL signal carrying an interrupt indication. The interrupt indication can be a simple control message transmitted by an associated non-AP STA and indicate to the AP that the data are pending at the non-AP STA. Upon reception of the interrupt indication, which is made possible by the partial FD communication mode, the AP can interrupt its transmission of the DL PPDU, schedule the transmission of a UL PPDU by the non-AP STA, and receive the data in the scheduled UL PPDU. In a similar manner, the interrupt indication could be used when a non-AP STA would like to send a relatively large amount of high priority data in a short time, using more than the limited bandwidth available in the partial FD communication mode, e.g., the entire bandwidth of the wireless channel. Accordingly, unlike the above-described scenarios, the non-AP STA could also send the interrupt indication even if the AP is able to receive a UL PPDU without interrupting its DL transmission. Upon reception of the interrupt indication, the AP can interrupt its transmission of the DL PPDU, schedule the transmission of a UL PPDU by the non-AP STA, and receive the data in the scheduled UL PPDU, using more bandwidth than would be available in the partial FD communication mode.

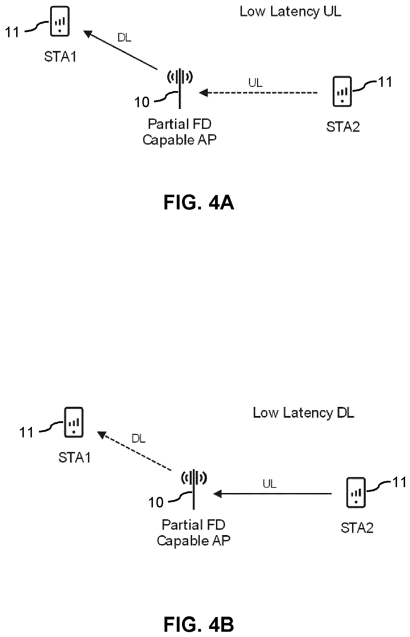

Figs. 4A and 4B illustrate scenarios in which an AP uses the partial FD communication mode to support low latency UL communication or low latency DL communication while serving two non-AP STAs not operating in the partial FD communication mode, denoted as STA1 and STA2. The AP and the non-AP STAs may for example correspond to one of the APs 10 illustrated in Fig. 1 and two its associated stations 11. In the scenario of Fig. 4A, the AP uses the partial FD communication mode to receive an incoming low-latency UL PPDU from one of the non-AP STAs (STA2), while sending an outgoing DL PPDU to the other non-AP STA (STA1). In the scenario of Fig. 4B, the AP uses the partial FD communication mode to send an outgoing low-latency DL PPDU to one of the non-AP STAs (STA1), while receiving an incoming UL PPDU from the other non-AP STA (STA2). It is noted that in scenarios like illustrated in Figs. 4A and 4B, an UL transmission from one non-AP STA may cause cross-RU interference to the DL reception at another non-AP STA (not illustrated in Figs. 4A and 4B). This cross-RU interference problem is however typically not as severe as the SI problem faced by the AP, e.g., because the interfering signal is typically weaker due to the path loss between the non-AP STA transmitting the UL PPDU and the non-AP STA receiving the DL PPDU. However, one or more of the above-mentioned supplemental measures, e.g., OFDM symbol boundary time alignment, specific puncturing of preamble fields, and/or specific TX processing to reduce interference problems such as PA distortion components could also help to reduce the cross-RU interference at the non-AP STA receiving the DL PPDU.

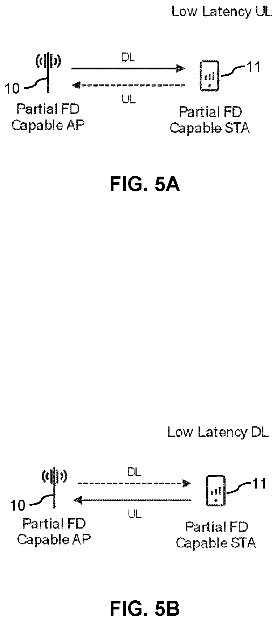

Figs. 5A and 5B illustrate scenarios in which an AP uses the partial FD communication mode to support low latency UL communication or low latency DL communication while serving a non-AP STA also operating in the partial FD communication mode. The AP and the non-AP STA may for example correspond to one of the APs 10 illustrated in Fig. 1 and one its associated stations 11. In the scenario of Fig. 5A, the AP uses the partial FD communication mode to receive an incoming low-latency UL PPDU from the non-AP STA, while sending an outgoing DL PPDU to the same non-AP STA. The non-AP STA uses the partial FD communication mode to send the low-latency UL PPDU to the AP, while receiving the DL PPDU from the AP. In the scenario of Fig. 5B, the AP uses the partial FD communication mode to send an outgoing low-latency DL PPDU to the non-AP STA, while receiving an incoming UL PPDU from the same non-AP STA. The non-AP STA uses the partial FD communication mode to receive the low-latency DL PPDU from the AP, while sending the UL PPDU to the AP.

It is noted that, for achieving low latency wireless communication, it can be assumed that it is beneficial to utilize as much bandwidth as possible to reduce the time required to transmit and successfully receive a data packet or similar data entity. Wider bandwidth can be expected to lead to shorter transmit duration of the data packet, if the other transmission parameters are kept constant. The partial FD communication mode of the illustrated concepts deliberately deviates from such assumption in using only a fraction of the available bandwidth of the wireless channel for the data field of a low latency PPDU. Still, the partial FD communication mode helps to provide low latency by allowing to significantly shorten the access to the wireless channel. Further, any increase in transmit duration of a PPDU can be managed by controlling the fractions of the bandwidth of the wireless channel that are allocated to the simultaneously transmitted and received PPDUs. For example, if an AP or other STA operating in the partial FD communication mode has gained access to the channel and determines that a high priority transmission of a PPDU may occur while transmitting or receiving a PPDU, it could allocate a larger fraction of the available bandwidth for the higher priority transmission. This may help to not only achieve shorter channel access times for the high priority transmission, but also to avoid an unfavorable increase in duration of the high priority transmission. For example, while communicating using the partial FD communication mode, an AP can utilize a smaller fraction of the bandwidth for the data field of its own DL PPDU and allocate larger fraction of the bandwidth for the data field of an UL PPDU if the UL PPDU has higher priority in terms of stricter requirements on latency. Thus, as long as the benefits achieved by the reduced channel access times are greater than the typically controllable penalty in terms of increased transmit duration of PPDUs, the partial FD communication mode can be expected to enhance the latency performance of the wireless communication system. For example, the partial FD communication mode can provide significant advantages in terms of reduced channel access times in scenarios where a large number of non-AP STAs is associated to the same AP or in scenarios which involve a mix of wireless transmissions that require low latency and wireless transmission without such latency requirements. A specific use case where the partial FD communication mode can be expected to be beneficial is an loT (Internet of Things) scenario, or in particular IIoT scenario, where at least some of the communicating non-AP STAs correspond to autonomously communicating sensors, actuators, or similar devices. In such scenario, for example a factory owner may have the opportunity to deploy most of the APs and non-AP STAs with support of the partial FD communication mode. The partial FD communication mode can also be expected help ensuring low latency and reliable communications in the wireless communication system even in an environment which is not completely controlled or managed by a single operator or deployment instance. Here, an environment which contains devices operating in the license-exempt spectrum and that are only installed by the facility owner and where unexpected interference from other systems and/or radio access technologies may only happen sporadically, may be regarded as being a controlled environment. The partial FD communication mode can help to balance delays that may arise due to sudden or uncontrolled interference that may arise in such a non-completely controlled environment.

In some scenarios, it may occur that not all APs or non-AP STAs in the wireless communication system have the capability to support the partial FD communication mode. In order to address such scenarios, signaling between the STAs (APs or non-AP STAs) of the wireless communication system may be used to indicate such capability. For example, if an AP has the capability to support the partial FD communication mode, it may indicate this capability in a beacon frame, an association response frame, and/or a probe response frame. Further, a non-AP STA may indicate the capability to support the partial FD communication mode in an association request frame and/or a probe request frame. Here, it is noted that the capability to support the partial FD communication mode may correspond to a capability to operate in the partial FD communication mode. Further, the capability to support the partial FD communication mode could correspond to capability to assist another STA operating in the partial FD communication mode by implementing one or more of the above-mentioned supplemental measures, such as OFDM symbol boundary time alignment, specific puncturing of preamble fields, and/or specific TX processing to reduce interference problems such as PA distortion components.

Further, the partial FD communication mode may also use signaling to setup and/or activate the partial FD communication mode and/or to control the wireless transmissions in the partial FD communication mode. For example, one or more of the involved STAs may send or receive signaling to setup and/or activate the partial FD communication mode before performing the simultaneous transmissions of PPDUs in the partial FD communication mode. Such signaling may for example involve that an AP which intends to use the partial FD communication mode initiates an exchange of control information with its associated non-AP STAs to orchestrate the wireless transmissions in the partial FD communication mode. The exchanged control information may for example help the AP to gain information on DL and UL load distributions and quality of service requirements of the non-AP STAs. Based on such information, the AP may negotiate and/or decide the non-overlapping RU allocations for the data fields of the DL and UL PPDUs to be transmitted in the partial FD communication mode.

Further, one or more of the involved STAs may send or receive signaling to control the simultaneous PPDU transmissions in the partial FD communication mode. For example, while orchestrating simultaneous DL and UL PPDU transmissions in the partial FD communication mode, the AP may send control information to trigger the PPDU transmissions and align the starting times of the DL and UL PPDU transmissions, e.g., with the aim of avoiding time overlap of preamble fields. Further, such control information could instruct the non-AP STAs to perform specific puncturing of the preamble fields of the UL PPDUs. Further, the AP could send such control information in a trigger frame to support UORA on a subset of the RUs of the wireless channel while simultaneously transmitting one or more DL PPDUs using the remaining RUs. Still further, control information exchanged between the involved STAs may also be used to indicate or negotiate RU allocations for the data fields of the PPDUs transmitted in the partial FD communication mode and/or to indicate timing information, e.g., for avoiding time overlap of the preamble fields and/or for the time alignment of OFDM symbol boundaries.

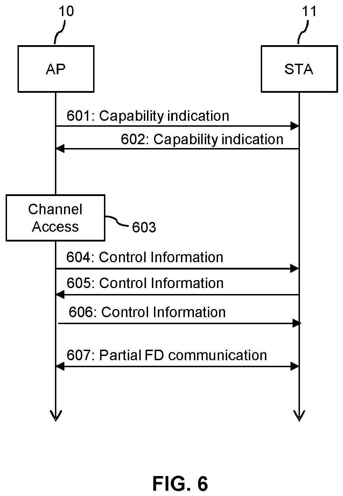

Fig. 6 shows an example of processes which involve usage of the partial FD communication mode. The processes of Fig. 6 involve an AP 10 and a non-AP STA 11, e.g., corresponding to one of the APs 10 and one of the stations 11 of Fig. 1.

In the processes of Fig. 6, the AP 10 sends a capability indication 601 to the non AP STA 11. The capability indication 601 indicates that the AP 10 supports the partial FD communication mode, in particular that the AP 10 has the capability to operate in the partial FD communication mode. The AP 10 may send the capability indication in a beacon frame, an association response frame, and/or a probe response frame.

As further illustrated, the non AP STA 11 sends a further capability indication 602 to the AP 10. The capability indication 602 indicates that the non-AP STA 11 supports the partial FD communication mode, in particular that the non-AP STA 11 has the capability to operate in the partial FD communication mode. The non-AP STA 11 may send the capability indication 602 in an association request frame and/or a probe request frame.

At some time, the AP 10 contends for the wireless channel and successfully gains access to the wireless channel. This may for example involve that the AP 10 performs a CCA (Clear Channel Assessment) procedure as specified in the IEEE 802.11 Standard.

As further illustrated, the AP 10 and the non-AP 11 may then exchange control information 604, 605, 606. In some cases, such exchange of control information may involve that the AP 10 indicates reservation of the wireless channel, e.g., in terms of a TXOP. Further, such exchange of control information may involve that the non-AP STA 11 indicates an intention to transmit on the wireless channel and/or other information. Still further, such exchange of information may involve that the AP 10 indicates parameters to be used for wireless transmissions in the partial FD communication mode, e.g., in terms of timing parameters and/or allocations of RUs. In some cases, the exchange of control information may also involve that the AP 10 sends a trigger frame.

As further illustrated, the AP 10 and the non-AP STA 11 then engage in partial FD communication. This may in particular involve that the AP 10 sends a DL PPDU to the non-AP STA 11 while the non-AP STA 11 sends a UL PPDU to the AP 10.

Orchestration of partial FD communication by an AP may for example be implemented as follows: When transmission of a DL PPDU starts before transmission of an UL PPDU, the AP may start transmission of a DL PPDU, which also signals information about one or more RUs being left empty for transmission of a UL PPDU in the partial FD communication mode. Further, the DL PPDU may indicate that transmission of the UL PPDU is allowed to begin only after the preamble field of the DL PPDU, so that time overlap of the preamble fields of the DL PPDU and the UL PPDU can be avoided. If the UL PPDU is trigger-based, the DL PPDU may also act as a trigger frame for the UL PPDU. Transmission of the UL PPDU will then start during the ongoing transmission of the DL PPDU, preferably after the preamble field of the DL PPDU. The UL PPDU may have a preamble field that overlaps the RUs allocated to the data field of the DL PPDU. In some scenarios, the preamble field of the UL PPDU may also be subject to puncturing, so that such overlap with the data field of the DL PPDU is reduced or completely avoided. Such puncturing to be applied could also be indicated by the DL PPDU. When transmission of a UL PPDU starts before transmission of a DL PPDU, the AP may send a trigger frame for starting the transmission of the UL PPDU. The trigger frame may also include information about one or more RUs which are reserved for transmission of a DL PPDU. In response to the trigger frame, the corresponding non-AP STA then starts the transmission of the UL PPDU. The AP then starts transmission of the DL PPDU, preferably after receiving the preamble field of the UL PPDU, so that time overlap of the preamble fields of the DL PPDU and the UL PPDU can be avoided. The DL PPDU may have a preamble field that overlaps the RUs allocated to the data field of the UL PPDU. In some scenarios, the AP may choose to apply puncturing to the preamble field of the DL PPDU, so that such overlap with the data field of the UL PPDU is reduced or completely avoided.

It is noted that in some scenarios, there may be rules and regulations that need to be strictly followed when transmitting on the wireless channel, e.g., when the wireless channel is from an unlicensed spectrum. In order to facilitate use of the partial FD communication mode, some of the existing rules and regulations could be adapted. For example, energy detection threshold (EDT) based rules for CCA could forbid a transmission of a PPDU when another signal is detected with an energy above the EDT, thereby preventing a partial FD STA to transmit a PPDU on the same wireless channel while simultaneously receiving a PPDU with detected energy above the EDT. This may be addressed by allowing the AP operating in the partial FD communication mode to orchestrate or perform partial FD communication in its BSS by first signaling and activating the partial FD communication mode. Once the partial FD communication mode is activated, and depending upon the rules and information signaled by the AP, the non-AP STAs in the AP's BSS may be allowed to perform UL transmissions during ongoing DL transmissions on the same wireless channel, using the partial FD capability of the AP.

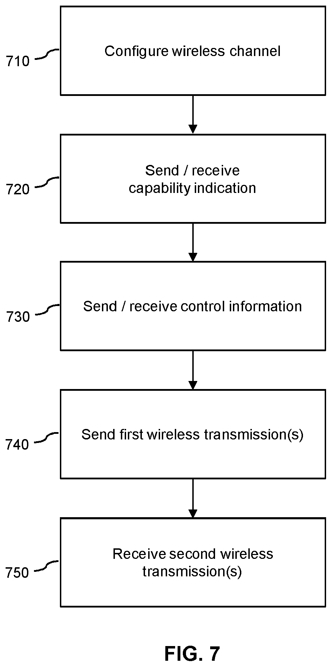

Fig. 7 shows a flowchart for illustrating a method, which may be utilized for implementing the illustrated concepts. The method of Fig. 7 may be used for implementing the illustrated concepts in a wireless communication device. The wireless communication device may be an AP, e.g., one of the above-mentioned APs 10. Alternatively, the wireless communication device may be a non-AP STA, such as one of the above-mentioned stations 11. The wireless communication system may be based on a wireless local area network, WLAN, technology, e.g., according to the IEEE 802.11 standards family.

If a processor-based implementation of the wireless communication device is used, at least some of the steps of the method of Fig. 7 may be performed and/or controlled by one or more processors of the wireless communication device. Such wireless communication device may also include a memory storing program code for implementing at least some of the below described functionalities or steps of the method of Fig. 7.

At step 710, the wireless communication device configures a wireless channel. The wireless channel defines multiple RUs by OFDM on a plurality of subcarriers, e.g., as specified in the IEEE 802.11ax technology.

At step 720, the wireless communication device may send a capability indication. The capability indication indicates a capability of the wireless communication device to transmit a first wireless transmission while receiving a second wireless transmission on the same wireless channel, using RUs which are at least in part non-overlapping. The capability may in particular correspond to a capability to support the above-mentioned partial FD communication mode. If the wireless communication device is an AP, it may send the indication in a beacon frame or in an association response frame or in a probe response frame. If the wireless communication device is a non-AP STA, it may send the indication in an association request frame or a probe request frame. As an alternative or in addition, step 710 may involve that the wireless communication device receives a further indication of a capability from another wireless communication device, in particular an indication of a capability of the other wireless communication device to receive the first wireless transmission while sending the second wireless transmission on the same wireless channel, using RUs which are at least in part non-overlapping. The other wireless communication device sending the further indication may be an AP, e.g., one of the above-mentioned APs 10. Alternatively, the other wireless communication device may be a non-AP STA, such as one of the above-mentioned stations 11. If the wireless communication device is an AP, it may receive the further indication in an association request frame or a probe request frame. If the wireless communication device is a non-AP STA, it may receive the further indication in a beacon frame or in an association response frame or in a probe response frame. The capability indications 601, 602 in the processes of Fig. 6 are examples of such indication(s) sent and/or received at step 720.

At step 730, the wireless communication device may send or receive control information. The control information may have the purpose of orchestrating or otherwise controlling wireless transmissions on the wireless channel configured at step 710. The control information 604, 605, 606 in the processes of Fig. 6 are examples of such control information sent and/or received at step 730.

At step 740, the wireless communication device sends a first wireless transmission on a first subset of the multiple RUs. The first wireless transmission may for example correspond to the above-mentioned outgoing PPDU.

At step 750, the wireless communication device receives a second wireless transmission on a second subset of the multiple RUs. This receiving of the second wireless transmission is performed while sending the first wireless transmission. The first subset of the multiple RUs and the second subset of the multiple RUs are at least in part non-overlapping. The second wireless transmission may for example correspond to the above-mentioned incoming PPDU.

OFDM symbols of the second wireless transmission are time-aligned with OFDM symbols of the first wireless transmission. This time-alignment may be controlled based on the second wireless transmission, which starts first, and/or based on control information sent or received by the wireless communication device, e.g., control information sent and/or received at step 730.

The second wireless transmission starts before the first wireless transmission. The time alignment of the OFDM symbols of the second wireless transmission and the first wireless transmission can then be based on time-aligning the OFDM symbols of the first wireless transmission to the OFDM symbols of the second wireless transmission.

The first wireless transmission and the second wireless transmission each comprise a preamble part and a data part, e.g., as explained above for the preamble field and the data field of the incoming and outgoing PPDUs. In such case, the preamble part of the first wireless transmission and the preamble part of the second wireless transmission may at least in part be non-overlapping in time. The preamble part of the first wireless transmission is punctured, e.g., according to a first puncturing pattern which depends on the second subset of the multiple RUs. The first puncturing pattern may be defined to reduce or avoid overlap of the preamble part of the first wireless transmission with the second subset of the multiple RUs. In some scenarios, also the preamble part of the second wireless transmission is punctured, e.g., according to a second puncturing pattern which depends on the first subset of the multiple RUs. The second puncturing pattern may be defined to reduce or avoid overlap of the preamble part of the second wireless transmission with the first subset of the multiple RUs.

In some scenarios, the wireless communication device may set one or more transmit parameters of the first wireless transmission depending on an expected level of interference generated by the first wireless transmission on the second subset of the multiple RUs. For example, such transmit parameter(s) could include a transmit power level and/or MCS.

In some scenarios, the wireless communication device may set one or more transmit parameters of the first wireless transmission depending on an expected level of interference generated by the second wireless transmission on the first subset of the multiple RUs. For example, such transmit parameter(s) could include a transmit power level and/or MCS.

In some scenarios, the wireless communication device may control one or more transmit parameters of the second wireless transmission depending on an expected level of interference generated by the first wireless transmission on the second subset of the multiple RUs, e.g., by using a feedback loop to a sender of the second wireless transmission. For example, such controlled transmit parameter(s) could include a transmit power level and/or MCS.

In some scenarios, the wireless communication device may control one or more transmit parameters of the second wireless transmission depending on an expected level of interference generated by the second wireless transmission on the first subset of the multiple RUs. For example, such controlled transmit parameter(s) could include a transmit power level and/or MCS.

As explained in connection with step 720, the wireless communication device may send an indication of a capability of the wireless communication device to perform said transmitting of the first wireless transmission while receiving the second wireless transmission. In response to sending such indication, the wireless communication device may perform said transmitting of the first wireless transmission while receiving the second wireless transmission.

As explained in connection with step 720, the wireless communication device may receive a further indication of a capability of a further wireless communication device to receive the first wireless transmission while sending the second wireless transmission. In response to such further indication, the wireless communication device may transmit the first wireless transmission to the further wireless communication device while receiving the second wireless transmission from the further wireless communication device.

At step 730, the wireless communication device may send first control information to a recipient of the first wireless transmission. The first control information may for example indicate the first subset of the multiple RUs. Further, at step 730 the wireless communication device may receive second control information from a recipient of the first wireless transmission. The second control information may indicate the first subset of the multiple RUs and/or the second subset of the multiple RUs. Further, the second control information may control timing of the first wireless transmission. The second control information could for example be part of a trigger frame which triggers the first wireless transmission. Further, at step 730 the wireless communication device may send third control information to a sender of the second wireless transmission. The third control information may indicate the first subset of the multiple RUs and/or the second subset of the multiple RUs. The second control information could for example be part of a trigger frame which triggers the second wireless transmission. Further, at step 730 the wireless communication device may receive fourth control information from a sender of the second wireless transmission. The fourth control information may indicate the second subset of the multiple RUs.

In some scenarios, steps 740 and 750 may involve that the wireless communication device sends multiple first wireless transmissions on the first subset of the multiple RUs and, while sending the multiple first wireless transmissions, receives the second wireless transmission on the second subset of the multiple RUs. In addition or as an alternative, steps 740 and 750 may involve that while sending the first wireless transmission on the first subset of the multiple RUs, the wireless communication device receives multiple second wireless transmissions on the second subset of the multiple RUs. In some scenarios, steps 740 and 750 may involve that the wireless communication device sends multiple first wireless transmissions on the first subset of the multiple RUs and, while sending the multiple first wireless transmissions, receives multiple second wireless transmissions on the second subset of the multiple RUs. The sending of the multiple first wireless transmissions on the first subset of the multiple RUs may be based on OFDMA, e.g., DL OFDMA or UL OFDMA. Similarly, the receiving of the multiple second wireless transmissions on the second subset of the multiple RUs may be based on OFDMA, e.g., UL OFDMA or DL OFDMA.

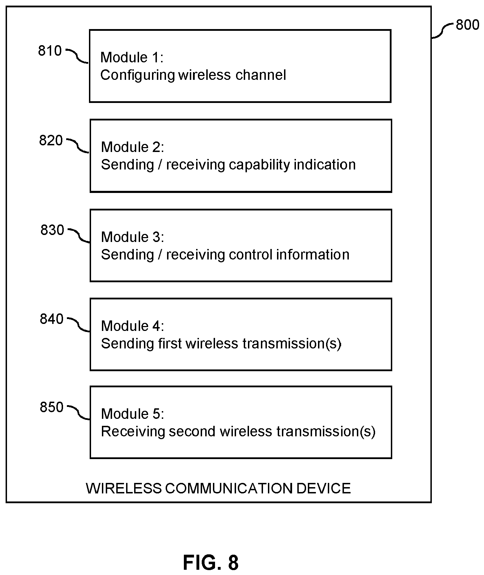

Fig. 8 shows a block diagram for illustrating functionalities of a wireless communication device 800 which operates according to the method of Fig. 7. The wireless communication device 800 may for example correspond to one of above-mentioned APs 10 or to one of the above-mentioned stations 11. As illustrated, the wireless communication device 800 may be provided with a module 810 configured to configure a wireless channel defining multiple RUs, such as explained in connection with step 710. Further, the wireless communication device 800 may be configured with a module 820 configured to send and/or receive a capability indication, such as explained in connection with step 720. Further, the wireless communication device 800 may be provided with a module 830 configured to send and/or received control information, such as explained in connection with step 730. Further, the wireless communication device 800 may be provided with a module 840 configured to send a first wireless transmission, such as explained in connection with step 740. Further, the wireless communication device 800 may be provided with a module 850 configured to receive a second wireless transmission, such as explained in connection with step 750.

It is noted that the wireless communication device 800 may include further modules for implementing other functionalities, such as known functionalities of an AP or non-AP STA in an IEEE 802.11 technology. Further, it is noted that the modules of the wireless communication device 800 do not necessarily represent a hardware structure of the wireless communication device 800, but may also correspond to functional elements, e.g., implemented by hardware, software, or a combination thereof.

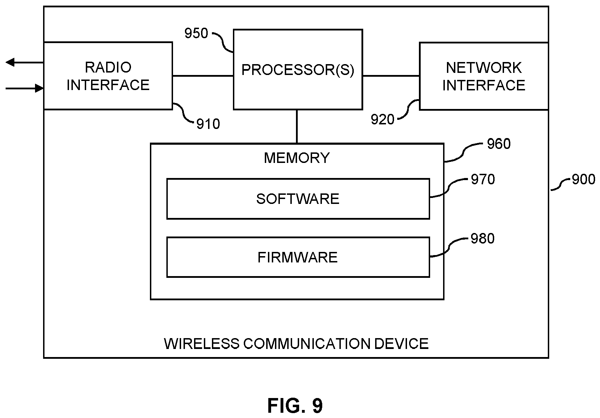

Fig. 9 illustrates a processor-based implementation of a wireless communication device 900. The structures as illustrated in Fig. 9 may be used for implementing the above-described concepts. The wireless communication device 900 may for example correspond to one of above-mentioned APs 10 or to one of the above-mentioned stations 11.

As illustrated, the wireless communication device 900 includes a radio interface 910. The radio interface 910 may for example be based on a WLAN technology, e.g., according to an IEEE 802.11 family standard. However, other wireless technologies could be supported as well, e.g., the LTE technology or the NR technology. In some cases, the radio interface may comprise multiple transmit and receive processing chains. In some scenarios, the radio interface 910 may be based on multiple antennas of the wireless communication device 900 and support beamformed multi-antenna port transmission to enable spatial multiplexing of wireless transmissions, i.e., usage of multiple spatial streams. Further, if the wireless communication device 900 is an AP, it may be provided with a network interface 920 for connecting to a data network, e.g., using a wire-based connection.

Further, the wireless communication device 900 may include one or more processors 950 coupled to the interface(s) 910, 920 and a memory 960 coupled to the processor(s) 950. By way of example, the interface(s) 910, 920, the processor(s) 950, and the memory 960 could be coupled by one or more internal bus systems of the wireless communication device 900. The memory 960 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless transmissions, such as explained in connection with Fig. 7.

It is to be understood that the structures as illustrated in Fig. 9 are merely schematic and that the wireless communication device 900 may actually include further components which, for the sake of clarity, have not been illustrated, e.g., further interfaces or further processors. Also, it is to be understood that the memory 960 may include further program code for implementing known functionalities of an AP or non-AP STA in an IEEE 802.11 technology. According to some embodiments, also a computer program may be provided for implementing functionalities of the wireless communication device 900, e.g., in the form of a physical medium storing the program code and/or other data to be stored in the memory 960 or by making the program code available for download or by streaming.

As can be seen, the concepts as described above may be used for efficiently controlling wireless transmissions, specifically in view of reducing channel access delay for low-latency wireless transmissions and/or in view of enhancing system performance.

It is to be understood that the examples and embodiments as explained above are merely illustrative and susceptible to various modifications. For example, the illustrated concepts are not limited with respect to the number of parallel incoming and outgoing wireless transmissions. Further, the illustrated concepts may be applied in connection with various kinds of wireless technologies, without limitation to WLAN technologies. Further, the concepts may be applied with respect to various types of APs and STAs. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

The invention is defined by the appended claims.

## Claims

1. A method of controlling wireless transmissions in a wireless communication system, the method comprising:
a wireless communication device (10, 11; 800; 900) configuring a wireless channel defining multiple resource units by orthogonal frequency division multiplexing, OFDM, on a plurality of subcarriers;
the wireless communication device (10, 11; 800; 900) sending a first wireless transmission on a first subset of the multiple resource units; and
while sending the first wireless transmission, the wireless communication device (10, 11; 800; 900) receiving a second wireless transmission on a second subset of the multiple resource units, the second wireless transmission starting before the first wireless transmission,
wherein the first subset of the multiple resource units and the second subset of the multiple resource units are at least in part non-overlapping,
wherein OFDM symbols of the second wireless transmission are time-aligned with OFDM symbols of the first wireless transmission,
wherein the first wireless transmission and the second wireless transmission each comprise a preamble part and a data part, and
wherein the preamble part of the first wireless transmission is punctured based on the second subset of the multiple resource units.

2. The method according to claim 1,
wherein the time alignment of the OFDM symbols of the second wireless transmission and the first wireless transmission is based on time-aligning the OFDM symbols of the first wireless transmission to the OFDM symbols of the second wireless transmission.

3. The method according to any one of the preceding claims,
wherein the preamble part of the first wireless transmission and the preamble part of the second wireless transmission are at least in part non-overlapping in time, and/or
wherein the preamble part of the first wireless transmission is punctured according to a first puncturing pattern which depends on the second subset of the multiple resource units, and/or wherein the preamble part of the second wireless transmission is punctured according to a second puncturing pattern which depends on the first subset of the multiple resource units.

4. The method according to any one of the preceding claims, comprising:
The wireless communication device (10, 11; 800; 900) setting one or more transmit parameters of the first wireless transmission depending on an expected level of interference generated by the first wireless transmission on the second subset of the multiple resource units, and/or
the wireless communication device (10, 11; 800; 900) setting one or more transmit parameters of the first wireless transmission depending on an expected level of interference generated by the second wireless transmission on the first subset of the multiple resource units.

5. The method according to any one of the preceding claims, comprising:
The wireless communication device (10, 11; 800; 900) controlling one or more transmit parameters of the second wireless transmission depending on an expected level of interference generated by the first wireless transmission on the second subset of the multiple resource units, and/or
the wireless communication device (10, 11; 800; 900) controlling one or more transmit parameters of the second wireless transmission depending on an expected level of interference generated by the second wireless transmission on the first subset of the multiple resource units.

6. The method according to any one of the preceding claims, comprising:
the wireless communication device (10, 11; 800; 900) sending an indication (601, 602) of a capability of the wireless communication device (10, 11; 800; 900) to perform said transmitting of the first wireless transmission while receiving the second wireless transmission, and
in response to sending the indication (601, 602), the wireless communication device (10, 11; 800; 900) performing said transmitting of the first wireless transmission while receiving the second wireless transmission.

7. The method according to any one of the preceding claims, comprising:
the wireless communication device (10, 11; 800; 900) receiving an further indication (601, 602) of a capability of a further wireless communication device (10, 11; 800; 900) to receive the first wireless transmission while sending the second wireless transmission, and
in response to receiving the further indication (601, 602), the wireless communication device (10, 11; 800; 900) performing said transmitting of the first wireless transmission to the further wireless communication device (10, 11; 800; 900) while receiving the second wireless transmission from the further wireless communication device (10, 11; 800; 900).

8. The method according to any one of the preceding claims, comprising:
the wireless communication device (10, 11; 800; 900) sending first control information (601, 602, 603) to a recipient of the first wireless transmission, wherein the first control information (601, 602, 603) indicates the first subset of the multiple resource units.

9. The method according to any one of the preceding claims, comprising:
The wireless communication device (10, 11; 800; 900) receiving second control information (601, 602, 603) from a recipient of the first wireless transmission, wherein the second control information (601, 602, 603) indicates the first subset of the multiple resource units and/or the second subset of the multiple resource units and/or controls timing of the first wireless transmission.

10. The method according to any one of the preceding claims, comprising:
the wireless communication device (10, 11; 800; 900) sending third control information (601, 602, 603) to a sender of the second wireless transmission, wherein the third control information (601, 602, 603) indicates the first subset of the multiple resource units and/or the second subset of the multiple resource units and/or controls timing of the second wireless transmission.

11. The method according to any one of the preceding claims, comprising:
the wireless communication device (10, 11; 800; 900) receiving fourth control information (601, 602, 603) from a sender of the second wireless transmission, wherein the fourth control information (601, 602, 603) indicates the second subset of the multiple resource units.

12. The method according to any one of the preceding claims, comprising:
the wireless communication device (10, 11; 800; 900) sending multiple first wireless transmissions on the first subset of the multiple resource units and, while sending the multiple first wireless transmissions, receiving the second wireless transmission on the second subset of the multiple resource units; and/or
while sending the first wireless transmission on the first subset of the multiple resource units, the wireless communication device (10, 11; 800; 900) receiving multiple second wireless transmissions on the second subset of the multiple resource units.; and/or
the wireless communication device (10, 11; 800; 900) sending multiple first wireless transmissions on the first subset of the multiple resource units and, while sending the multiple first wireless transmissions, receiving multiple second wireless transmissions on the second subset of the multiple resource units.

13. The method according to any one of the preceding claims,
wherein the wireless communication device (10, 11; 800; 900) is an access point, AP or a non-AP station.

14. The method according to any one of the preceding claims,
wherein the wireless communication system is based on a Wireless Local Area Network technology according to the IEEE 802.11 standards family.

15. A wireless communication device (10, 11; 800; 900) for a wireless communication system, the wireless communication device (10, 11; 800; 900) being configured to:
configure a wireless channel defining multiple resource units by orthogonal frequency division multiplexing, OFDM, on a plurality of subcarriers;
send a first wireless transmission on a first subset of the multiple resource units; and
while sending the first wireless transmission, receive a second wireless transmission on a second subset of the multiple resource units, the second wireless transmission starting before the first wireless transmission,
wherein the first subset of the multiple resource units and the second subset of the multiple resource units are at least in part non-overlapping, and
wherein OFDM symbols of the second wireless transmission are time-aligned with OFDM symbols of the first wireless transmission,
wherein the first wireless transmission and the second wireless transmission each comprise a preamble part and a data part, and
wherein the preamble part of the first wireless transmission is punctured based on the second subset of the multiple resource units.

16. The wireless communication device (10, 11; 800; 900) according to claim 15,
wherein the wireless communication device (10, 11; 800; 900) is configured to perform a method according to any one of claims 2 to 14.

17. A computer program or computer program product comprising program code to be executed by at least one processor (950) of a wireless communication device (10, 11; 800; 900), whereby execution of the program code causes the wireless communication device (10, 11; 800; 900) to perform a method according to any one of claims 1 to 14.

## Patentansprüche

1. Verfahren zur Steuerung von Drahtlosübertragungen in einem Drahtloskommunikationssystem, wobei das Verfahren umfasst, dass:
eine drahtlose Kommunikationsvorrichtung (10, 11; 800; 900) einen Drahtloskanal konfiguriert, der mehrere Ressourceneinheiten durch orthogonales Frequenzmultiplex, OFDM, auf einer Mehrzahl von Unterträgern definiert;
die drahtlose Kommunikationsvorrichtung (10, 11; 800; 900) eine erste Drahtlosübertragung auf einer ersten Teilmenge der mehreren Ressourceneinheiten sendet; und
die drahtlose Kommunikationsvorrichtung (10, 11; 800; 900) während des Sendens der ersten Drahtlosübertragung eine zweite Drahtlosübertragung auf einer zweiten Teilmenge der mehreren Ressourceneinheiten empfängt, wobei die zweite Drahtlosübertragung vor der ersten Drahtlosübertragung beginnt,
wobei die erste Teilmenge der mehreren Ressourceneinheiten und die zweite Teilmenge der mehreren Ressourceneinheiten einander zumindest teilweise nicht überlappen,
wobei OFDM-Signale der zweiten Drahtlosübertragung mit OFDM-Symbolen der ersten Drahtlosübertragung zeitlich abgeglichen sind,
wobei die erste Drahtlosübertragung und die zweite Drahtlosübertragung jeweils einen Präambelteil und einen Datenteil umfassen und
wobei der Präambelteil der ersten Drahtlosübertragung basierend auf der zweiten Teilmenge der mehreren Ressourceneinheiten punktiert ist.

2. Verfahren nach Anspruch 1,
wobei der Zeitabgleich der OFDM-Symbole der zweiten Drahtlosübertragung und der ersten Drahtlosübertragung auf zeitlichem Abgleichen der OFDM-Symbole der ersten Drahtlosübertragung mit den OFDM-Symbolen der zweiten Drahtlosübertragung basiert.

3. Verfahren nach einem der vorhergehenden Ansprüche,
wobei der Präambelteil der ersten Drahtlosübertragung und der Präambelteil der zweiten Drahtlosübertragung einander zeitlich zumindest teilweise nicht überlappen und/oder
wobei der Präambelteil der ersten Drahtlosübertragung gemäß einem ersten Punktierungsmuster punktiert ist, das von der zweiten Teilmenge der mehreren Ressourceneinheiten abhängt, und/oder
wobei der Präambelteil der zweiten Drahtlosübertragung gemäß einem zweiten Punktierungsmuster punktiert ist, das von der ersten Teilmenge der mehreren Ressourceneinheiten abhängt.

4. Verfahren nach einem der vorhergehenden Ansprüche, umfassend, dass:
die drahtlose Kommunikationsvorrichtung (10, 11; 800; 900) einen oder mehrere Übertragungsparameter der ersten Drahtlosübertragung in Abhängigkeit von einem erwarteten Störpegel festlegt, der durch die erste Drahtlosübertragung auf der zweiten Teilmenge der mehreren Ressourceneinheiten erzeugt wird, und/oder
die drahtlose Kommunikationsvorrichtung (10, 11; 800; 900) einen oder mehrere Übertragungsparameter der ersten Drahtlosübertragung in Abhängigkeit von einem erwarteten Störpegel festlegt, der durch die zweite Drahtlosübertragung auf der ersten Teilmenge der mehreren Ressourceneinheiten erzeugt wird.

5. Verfahren nach einem der vorhergehenden Ansprüche, umfassend, dass:
die drahtlose Kommunikationsvorrichtung (10, 11; 800; 900) einen oder mehrere Übertragungsparameter der zweiten Drahtlosübertragung in Abhängigkeit von einem erwarteten Störpegel festlegt, der durch die erste Drahtlosübertragung auf der zweiten Teilmenge der mehreren Ressourceneinheiten erzeugt wird, und/oder
die drahtlose Kommunikationsvorrichtung (10, 11; 800; 900) einen oder mehrere Übertragungsparameter der zweiten Drahtlosübertragung in Abhängigkeit von einem erwarteten Störpegel festlegt, der durch die zweite Drahtlosübertragung auf der ersten Teilmenge der mehreren Ressourceneinheiten erzeugt wird.

6. Verfahren nach einem der vorhergehenden Ansprüche, umfassend, dass:
die drahtlose Kommunikationsvorrichtung (10, 11; 800; 900) eine Angabe (601, 602) einer Fähigkeit der drahtlosen Kommunikationsvorrichtung (10, 11; 800; 900) sendet, um das Übertragen der ersten Drahtlosübertragung während des Empfangens der zweiten Drahtlosübertragung durchzuführen, und
die drahtlose Kommunikationsvorrichtung (10, 11; 800; 900) in Reaktion auf das Senden der Angabe (601, 602) das Übertragen der ersten Drahtlosübertragung während des Empfangens der zweiten Drahtlosübertragung durchführt.

7. Verfahren nach einem der vorhergehenden Ansprüche, umfassend, dass:
die drahtlose Kommunikationsvorrichtung (10, 11; 800; 900) eine weitere Angabe (601, 602) einer Fähigkeit einer weiteren drahtlosen Kommunikationsvorrichtung (10, 11; 800; 900) empfängt, um die erste Drahtlosübertragung während des Sendens der zweiten Drahtlosübertragung zu empfangen, und
die drahtlose Kommunikationsvorrichtung (10, 11; 800; 900) in Reaktion auf das Empfangen der weiteren Angabe (601, 602) das Übertragen der ersten Drahtlosübertragung an die weitere drahtlose Kommunikationsvorrichtung (10, 11; 800; 900) während des Empfangens der zweiten Drahtlosübertragung von der weiteren drahtlosen Kommunikationsvorrichtung (10, 11; 800; 900) durchführt.

8. Verfahren nach einem der vorhergehenden Ansprüche, umfassend, dass:
die drahtlose Kommunikationsvorrichtung (10, 11; 800; 900) erste Steuerinformationen (601, 602, 603) an einen Empfänger der ersten Drahtlosübertragung sendet, wobei die ersten Steuerinformationen (601, 602, 603) die erste Teilmenge der mehreren Ressourceneinheiten angeben.

9. Verfahren nach einem der vorhergehenden Ansprüche, umfassend, dass:
die drahtlose Kommunikationsvorrichtung (10, 11; 800; 900) zweite Steuerinformationen (601, 602, 603) von einem Empfänger der ersten Drahtlosübertragung empfängt, wobei die zweiten Steuerinformationen (601, 602, 603) die erste Teilmenge der mehreren Ressourceneinheiten angeben und/oder die zweite Teilmenge der mehreren Ressourceneinheiten angeben und/oder die Zeitsteuerung der ersten Drahtlosübertragung steuern.

10. Verfahren nach einem der vorhergehenden Ansprüche, umfassend, dass:
die drahtlose Kommunikationsvorrichtung (10, 11; 800; 900) dritte Steuerinformationen (601, 602, 603) an einen Sender der zweiten Drahtlosübertragung sendet, wobei die dritten Steuerinformationen (601, 602, 603) die erste Teilmenge der mehreren Ressourceneinheiten angeben und/oder die zweite Teilmenge der mehreren Ressourceneinheiten angeben und/oder die Zeitsteuerung der zweiten Drahtlosübertragung steuern.

11. Verfahren nach einem der vorhergehenden Ansprüche, umfassend, dass:
die drahtlose Kommunikationsvorrichtung (10, 11; 800; 900) vierte Steuerinformationen (601, 602, 603) von einem Sender der zweiten Drahtlosübertragung empfängt, wobei die vierten Steuerinformationen (601, 602, 603) die zweite Teilmenge der mehreren Ressourceneinheiten angeben.

12. Verfahren nach einem der vorhergehenden Ansprüche, umfassend, dass:
die drahtlose Kommunikationsvorrichtung (10, 11; 800; 900) mehrere erste Drahtlosübertragungen auf der ersten Teilmenge der mehreren Ressourceneinheiten sendet und während des Sendens der mehreren ersten Drahtlosübertragungen die zweite Drahtlosübertragung auf der zweiten Teilmenge der mehreren Ressourceneinheiten empfängt; und/oder
die drahtlose Kommunikationsvorrichtung (10, 11; 800; 900) während des Sendens der ersten Drahtlosübertragung auf der ersten Teilmenge der mehreren Ressourceneinheiten mehrere zweite Drahtlosübertragungen auf der zweiten Teilmenge der mehreren Ressourceneinheiten empfängt; und/oder
die drahtlose Kommunikationsvorrichtung (10, 11; 800; 900) mehrere erste Drahtlosübertragungen auf der ersten Teilmenge der mehreren Ressourceneinheiten sendet und während des Sendens der mehreren ersten Drahtlosübertragungen mehrere zweite Drahtlosübertragungen auf der zweiten Teilmenge der mehreren Ressourceneinheiten empfängt.

13. Verfahren nach einem der vorhergehenden Ansprüche,
wobei die drahtlose Kommunikationsvorrichtung (10, 11; 800; 900) ein Zugangspunkt, AP, oder eine Nicht-AP-Station ist.

14. Verfahren nach einem der vorhergehenden Ansprüche,
wobei das Drahtloskommunikationssystem auf einer Wireless Local Area Network-Technologie gemäß der IEEE 802.11-Standardfamilie basiert.

15. Drahtlose Kommunikationsvorrichtung (10; 11; 800; 900) für ein Drahtloskommunikationssystem, wobei die drahtlose Kommunikationsvorrichtung (10; 11; 800; 900) konfiguriert ist zum:
Konfigurieren eines Drahtloskanals, der mehrere Ressourceneinheiten durch orthogonales Frequenzmultiplex, OFDM, auf einer Mehrzahl von Unterträgern definiert;
Senden einer ersten Drahtlosübertragung auf einer ersten Teilmenge der mehreren Ressourceneinheiten; und
Empfangen einer zweiten Drahtlosübertragung auf einer zweiten Teilmenge der mehreren Ressourceneinheiten während des Sendens der ersten Drahtlosübertragung, wobei die zweite Drahtlosübertragung vor der ersten Drahtlosübertragung beginnt,
wobei die erste Teilmenge der mehreren Ressourceneinheiten und die zweiten Teilmenge der mehreren Ressourceneinheiten einander zumindest teilweise nicht überlappen und
wobei OFDM-Signale der zweiten Drahtlosübertragung mit OFDM-Symbolen der ersten Drahtlosübertragung zeitlich abgeglichen sind,
wobei die erste Drahtlosübertragung und die zweite Drahtlosübertragung jeweils einen Präambelteil und einen Datenteil umfassen und
wobei der Präambelteil der ersten Drahtlosübertragung basierend auf der zweiten Teilmenge der mehreren Ressourceneinheiten punktiert ist.

16. Drahtlose Kommunikationsvorrichtung (10, 11; 800; 900) nach Anspruch 15,
wobei die drahtlose Vorrichtung (10, 11; 800; 900) zum Durchführen eines Verfahrens nach einem der Ansprüche 2 bis 14 konfiguriert ist.

17. Computerprogramm oder Computerprogrammprodukt, umfassend Programmcode, der von mindestens einem Prozessor (950) einer drahtlosen Kommunikationsvorrichtung (10, 11; 800; 900) ausgeführt werden soll, wobei die Ausführung des Programmcodes die drahtlose Kommunikationsvorrichtung (10, 11; 800; 900) zum Durchführen eines Verfahrens nach einem der Ansprüche 1 bis 14 veranlasst.

## Revendications

1. Procédé de commande de transmissions sans fil dans un système de communication sans fil, le procédé comprenant :
un dispositif de communication sans fil (10, 11 ; 800 ; 900) configurant un canal sans fil définissant de multiples unités de ressources par multiplexage par répartition de fréquence orthogonale, OFDM, sur une pluralité de sous-porteuses ;
le dispositif de communication sans fil (10, 11 ; 800 ; 900) envoyant une première transmission sans fil sur un premier sous-ensemble des multiples unités de ressources ; et
tout en envoyant la première transmission sans fil, le dispositif de communication sans fil (10, 11 ; 800 ; 900) recevant une deuxième transmission sans fil sur un deuxième sous-ensemble des multiples unités de ressources, la deuxième transmission sans fil commençant avant la première transmission sans fil,
dans lequel le premier sous-ensemble des multiples unités de ressources et le deuxième sous-ensemble des multiples unités de ressources sont au moins en partie non chevauchants,
dans lequel des symboles OFDM de la deuxième transmission sans fil sont en alignement temporel sur des symboles OFDM de la première transmission sans fil,
dans lequel la première transmission sans fil et la deuxième transmission sans fil comprennent chacune une partie préambule et une partie données, et
dans lequel la partie préambule de la première transmission sans fil est perforée sur la base du deuxième sous-ensemble des multiples unités de ressources.

2. Procédé selon la revendication 1,
dans lequel l'alignement temporel des symboles OFDM de la deuxième transmission sans fil et de la première transmission sans fil est basé sur l'alignement temporel des symboles OFDM de la première transmission sans fil sur les symboles OFDM de la deuxième transmission sans fil.

3. Procédé selon l'une quelconque des revendications précédentes,
dans lequel la partie préambule de la première transmission sans fil et la partie préambule de la deuxième transmission sans fil sont au moins en partie non chevauchantes dans le temps, et/ou
dans lequel la partie préambule de la première transmission sans fil est perforée selon un premier motif de perforation qui dépend du deuxième sous-ensemble des multiples unités de ressources, et/ou
dans lequel la partie préambule de la deuxième transmission sans fil est perforée selon un deuxième motif de perforation qui dépend du premier sous-ensemble des multiples unités de ressources.

4. Procédé selon l'une quelconque des revendications précédentes, comprenant :
le dispositif de communication sans fil (10, 11 ; 800 ; 900) réglant un ou plusieurs paramètres de transmission de la première transmission sans fil selon un niveau attendu d'interférence générée par la première transmission sans fil sur le deuxième sous-ensemble des multiples unités de ressources, et/ou
le dispositif de communication sans fil (10, 11 ; 800 ; 900) réglant un ou plusieurs paramètres de transmission de la première transmission sans fil selon un niveau attendu d'interférence générée par la deuxième transmission sans fil sur le premier sous-ensemble des multiples unités de ressources.

5. Procédé selon l'une quelconque des revendications précédentes, comprenant :
le dispositif de communication sans fil (10, 11 ; 800 ; 900) commandant un ou plusieurs paramètres de transmission de la deuxième transmission sans fil selon un niveau attendu d'interférence générée par la première transmission sans fil sur le deuxième sous-ensemble des multiples unités de ressources, et/ou
le dispositif de communication sans fil (10, 11 ; 800 ; 900) commandant un ou plusieurs paramètres de transmission de la deuxième transmission sans fil selon un niveau attendu d'interférence générée par la deuxième transmission sans fil sur le premier sous-ensemble des multiples unités de ressources.

6. Procédé selon l'une quelconque des revendications précédentes, comprenant :
le dispositif de communication sans fil (10, 11 ; 800 ; 900) envoyant une indication (601, 602) d'une capacité du dispositif de communication sans fil (10, 11 ; 800 ; 900) à réaliser ladite transmission de la première transmission sans fil tout en recevant la deuxième transmission sans fil, et
en réponse à l'envoi de l'indication (601, 602), le dispositif de communication sans fil (10, 11 ; 800 ; 900) réalisant ladite transmission de la première transmission sans fil tout en recevant la deuxième transmission sans fil.

7. Procédé selon l'une quelconque des revendications précédentes, comprenant :
le dispositif de communication sans fil (10, 11 ; 800 ; 900) recevant une autre indication (601, 602) d'une capacité d'un autre dispositif de communication sans fil (10, 11 ; 800 ; 900) à recevoir la première transmission sans fil tout en envoyant la deuxième transmission sans fil, et
en réponse à la réception de l'autre indication (601, 602), le dispositif de communication sans fil (10, 11 ; 800 ; 900) réalisant ladite transmission de la première transmission sans fil à l'autre dispositif de communication sans fil (10, 11 ; 800 ; 900) tout en recevant la deuxième transmission sans fil depuis l'autre dispositif de communication sans fil (10, 11 ; 800 ; 900).

8. Procédé selon l'une quelconque des revendications précédentes, comprenant :
le dispositif de communication sans fil (10, 11 ; 800 ; 900) envoyant des premières informations de commande (601, 602, 603) à un destinataire de la première transmission sans fil, dans lequel les premières informations de commande (601, 602, 603) indiquent le premier sous-ensemble des multiples unités de ressources.

9. Procédé selon l'une quelconque des revendications précédentes, comprenant :
le dispositif de communication sans fil (10, 11 ; 800 ; 900) recevant des deuxièmes informations de commande (601, 602, 603) depuis un destinataire de la première transmission sans fil, dans lequel les deuxièmes informations de commande (601, 602, 603) indiquent le premier sous-ensemble des multiples unités de ressources et/ou le deuxième sous-ensemble des multiples unités de ressources et/ou commande une temporisation de la première transmission sans fil.

10. Procédé selon l'une quelconque des revendications précédentes, comprenant :
le dispositif de communication sans fil (10, 11 ; 800 ; 900) envoyant des troisièmes informations de commande (601, 602, 603) à un expéditeur de la deuxième transmission sans fil, dans lequel les troisièmes informations de commande (601, 602, 603) indiquent le premier sous-ensemble des multiples unités de ressources et/ou le deuxième sous-ensemble des multiples unités de ressources et/ou commande une temporisation de la deuxième transmission sans fil.

11. Procédé selon l'une quelconque des revendications précédentes, comprenant :
le dispositif de communication sans fil (10, 11 ; 800 ; 900) recevant des quatrièmes informations de commande (601, 602, 603) depuis un expéditeur de la deuxième transmission sans fil, dans lequel les quatrièmes informations de commande (601, 602, 603) indiquent le deuxième sous-ensemble des multiples unités de ressources.

12. Procédé selon l'une quelconque des revendications précédentes, comprenant :
le dispositif de communication sans fil (10, 11 ; 800 ; 900) envoyant de multiples première transmission sans fil sur le premier sous-ensemble des multiples unités de ressources et, tout en envoyant les multiples premières transmission sans fil, recevant la deuxième transmission sans fil sur le deuxième sous-ensemble des multiples unités de ressources ; et/ou
tout en envoyant la première transmission sans fil sur le premier sous-ensemble des multiples unités de ressources, le dispositif de communication sans fil (10, 11 ; 800 ; 900) recevant de multiples deuxièmes transmissions sans fil sur le deuxième sous-ensemble des multiples unités de ressources ; et/ou
le dispositif de communication sans fil (10, 11 ; 800 ; 900) envoyant de multiples premières transmissions sans fil sur le premier sous-ensemble des multiples unités de ressources et, tout en envoyant les multiples premières transmissions sans fil, recevant de multiples deuxièmes transmissions sans fil sur le deuxième sous-ensemble des multiples unités de ressources.

13. Procédé selon l'une quelconque des revendications précédentes,
dans lequel le dispositif de communication sans fil (10, 11 ; 800 ; 900) est un point d'accès, AP, ou une station non AP.

14. Procédé selon l'une quelconque des revendications précédentes,
dans lequel le système de communication sans fil est basé sur une technologie de réseau local sans fil selon la famille de normes IEEE 802.11.

15. Dispositif de communication sans fil (10, 11 ; 800 ; 900) pour un système de communication sans fil, le dispositif de communication sans fil (10, 11 ; 800 ; 900) étant configuré pour :
configurer un canal sans fil définissant de multiples unités de ressources par multiplexage par répartition de fréquence orthogonale, OFDM, sur une pluralité de sous-porteuses ;
envoyer une première transmission sans fil sur un premier sous-ensemble des multiples unités de ressources ; et
tout en envoyant la première transmission sans fil, recevoir une deuxième transmission sans fil sur un deuxième sous-ensemble des multiples unités de ressources, la deuxième transmission sans fil commençant avant la première transmission sans fil,
dans lequel le premier sous-ensemble des multiples unités de ressources et le deuxième sous-ensemble des multiples unités de ressources sont au moins en partie non chevauchants, et
dans lequel des symboles OFDM de la deuxième transmission sans fil sont en alignement temporel sur des symboles OFDM de la première transmission sans fil, dans lequel la première transmission sans fil et la deuxième transmission sans fil comprennent chacune une partie préambule et une partie données, et
dans lequel la partie préambule de la première transmission sans fil est perforée sur la base du deuxième sous-ensemble des multiples unités de ressources.

16. Dispositif de communication sans fil (10, 11 ; 800 ; 900) selon la revendication 15,
dans lequel le dispositif de communication sans fil (10, 11 ; 800 ; 900) est configuré pour réaliser un procédé selon l'une quelconque des revendications 2 à 14.

17. Programme informatique ou produit programme informatique comprenant un code de programme à exécuter par au moins un processeur (950) d'un dispositif de communication sans fil (10, 11 ; 800 ; 900), de telle manière qu'une exécution du code de programme amène le dispositif de communication sans fil (10, 11 ; 800 ; 900) à réaliser un procédé selon l'une quelconque des revendications 1 à 14.
